# EUROPEAN PATENT APPLICATION

(11) **EP 4 663 017 A1**
(43) Date of publication of application: **17.12.2025**
(21) Application number: 25172193.2
(22) Date of filing: 24.04.2025
(51) Int. Cl.: A01M 7/00, B05B 3/10

(54) **ELECTRICALLY ACTUATED 48-VOLT DC AGRICULTURAL SPRAYER WITH INDEPENDENT CONTROL OF AIR AND LIQUID FLOWS**

(30) Priority: 12.06.2024 IT 202400013426
(71) Applicant: Tecomec S.r.l., 42124 Reggio Emilia (IT)
(72) Inventor: BERNARDI, Stefano, 41124 MODENA (IT); FALAVIGNA, Riccardo, 42121 REGGIO EMILIA (IT); FERRARI, Marco, 41012 CARPI (MODENA) (IT); FORNACIARI, Andrea, 42123 REGGIO EMILIA (IT)
(74) Representative: Paparo, Aldo

(57) **Abstract**

A 48-volt electric sprayer machine for agriculture, comprising:
a plurality of blowers (2), each driven by a respective electric motor (20) and configured to produce an airflow;
a plurality of nebuliser nozzles (3), each of which is positioned in such a way as to deliver a nebulised product in the airflow produced by the blowers (2);
an electric pump (4), connected to the nebuliser nozzles (3) and adapted to supply a flow of product to the nebulisers (3);
each blower (2) is equipped with an electronic controller (21), connected to the electric motor (20) and configured to control the actuation of the electric motor (20);
each nebuliser nozzle (3) is equipped with a control solenoid valve (30), adapted to control the delivery of product;
the pump (4) is driven by an electric motor (40), equipped with an electronic controller (41);
the controllers (21) of the blowers (2), the control solenoid valves (30) and the controller (41) of the pump (4) are arranged to be connected with digital transmission to an electronic control unit (C), configured to control the independent actuation of each thereof, as a function of the conditions of use of the sprayer machine.

## Description

The present invention relates to an agricultural sprayer machine.

In particular, the invention relates to an agricultural sprayer machine equipped with a system for the variable application of a liquid in variable mixing with an airflow.

In particular, the invention relates to a machine equipped with one or more sprayers, arranged to deliver a nebulised product in an airflow. Such machines are used in agriculture to spray plants and crops with various kinds of products.

Typically, a sprayer machine comprises a device which produces an airflow, such as one or more fans, together with a pump which feeds the liquid to be sprayed to a series of nozzles. The nozzles determine the nebulisation of the liquid inside the airflow. The airflow transports the nebulised liquid towards the spraying area.

For the most part, the sprayer machines are towed or supported by a tractor. The actuation of the fans and the pump are obtained by means of a mechanical transmission to the power take-off of the tractor. The mechanical connection generally comprises two universal joints, connected to each other by a shaft, and at least one gear reducer. Overall, the mechanical transmission is bulky and heavy, as well as being characterised by a relatively low efficiency and a relatively high cost. Furthermore, it is not possible to control the spraying of the product in a sufficiently precise and punctual manner, for example in terms of flow rate.

The object of the present invention is to provide an agricultural sprayer machine which enables the performance of the currently available sprayer machines to be significantly improved.

An advantage of the machine according to the present invention is that of allowing an extremely precise control of the spraying, in terms of airflow rate, chemical flow rate, and direction control.

Another advantage of the machine according to the present invention is that of eliminating the need for a mechanical transmission from the tractor and allowing significant fuel savings.

Another advantage of the machine according to the present invention is that of saving the amount of chemical product, allowing the product to be sprayed only where actually necessary, with obvious environmental advantages.

Additional features and advantages of the present invention will become more apparent from the detailed description that follows of one embodiment of the invention in question, illustrated by way of non-limiting example in the appended figures, in which:

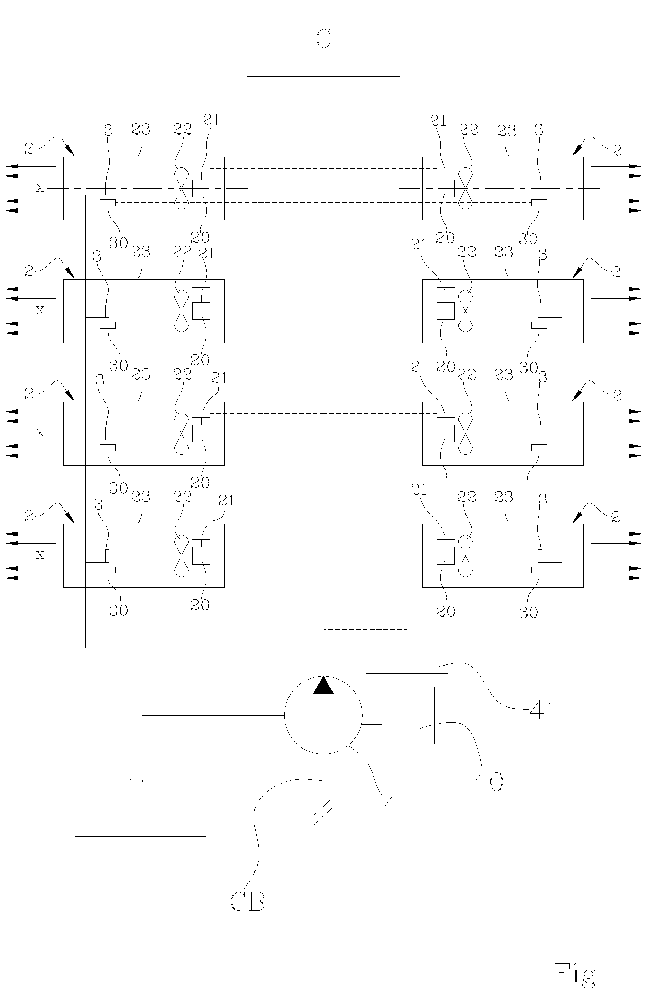

- Figure 1 shows a schematic view of the machine according to the present invention;

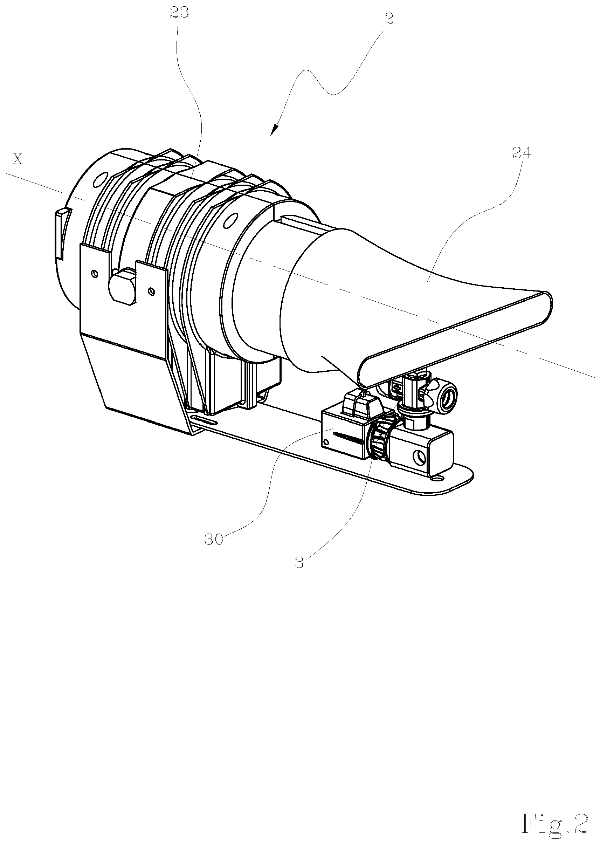

- Figure 2 shows a blower (2) which is part of the machine according to the present invention;

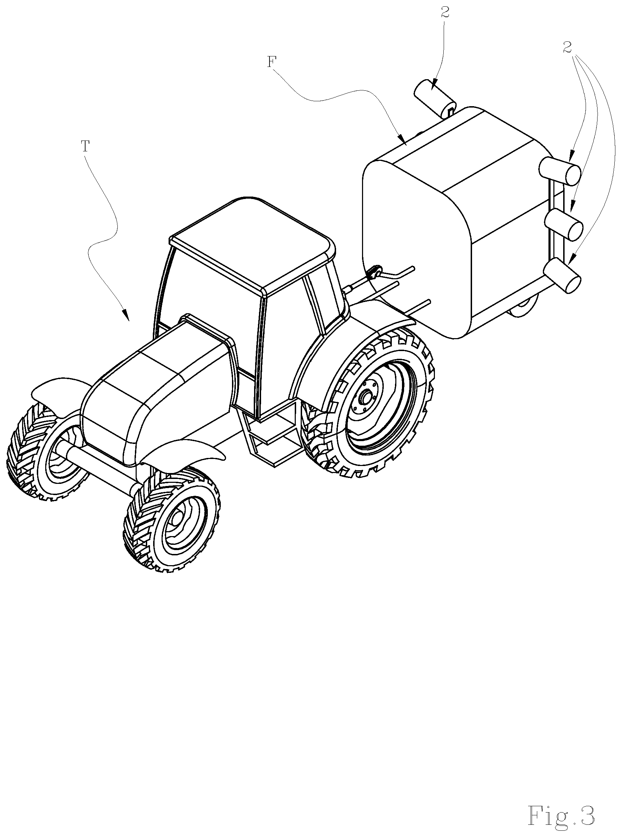

- Figure 3 shows a schematic view of a machine according to the present invention, engaged to a tractor (T);

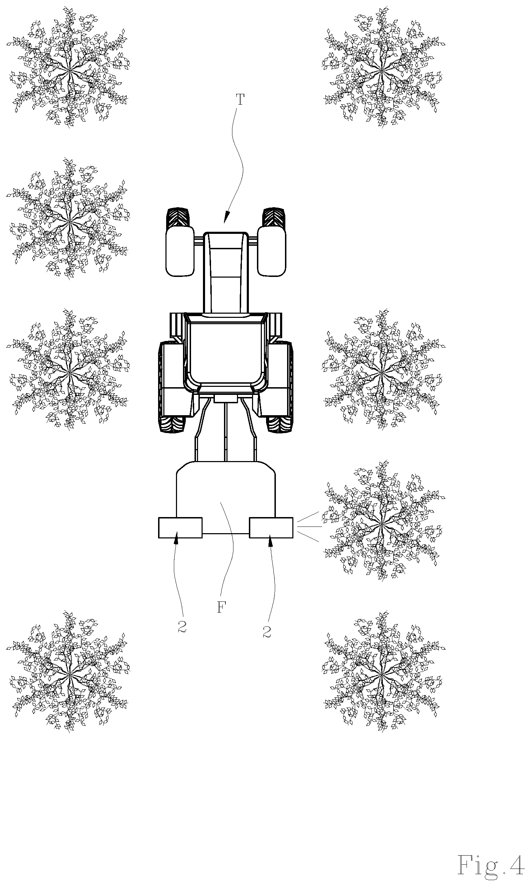

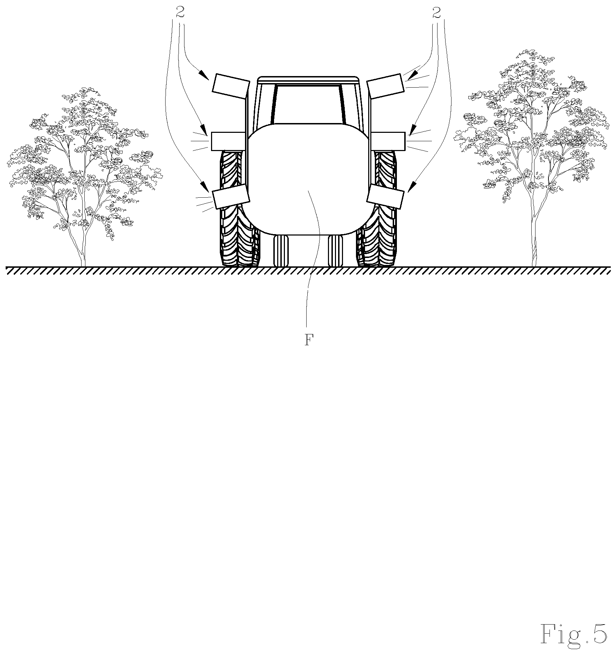

- Figures 4 and 5 respectively show in plan and rear view the machine depicted in Figure 3, between two rows of plants.

In a possible embodiment, the sprayer machine according to the present invention is provided with a support frame (F), provided with wheels and configured to be engaged to a tractor (T), so as to be towed by the latter. In such a case, it is not necessary to equip the sprayer machine with a propulsion system. In another possible embodiment, the sprayer machine according to the present invention is engaged to and supported by the tractor, in a rear area of the tractor itself, for example by means of the lifter with which the tractors are equipped.

The sprayer machine according to the present invention comprises a plurality of blowers (2), each driven by a respective electric motor (20). Each blower (2) is configured to produce a direct airflow overall along a flow direction (X).

Various examples of blowers are known in the art, all known to the person skilled in the art. In a preferred but not exclusive embodiment, the sprayer machine according to the present invention comprises blowers (2) of tubular configuration. In particular, each blower (2) comprises an impeller (22), configured to produce an airflow, and a tubular casing (23), open at the ends, which contains the impeller (22) therein. The tubular casing has a longitudinal axis (X). At the outlet end of the tubular casing (23), a diffuser (24) can be positioned, to improve the distribution of the outflow.

Advantageously, each tubular casing (23) is mounted on a motorised orientable support to allow for adjusting the orientation of each longitudinal axis (X).

The blowers (2) can be distributed in various manners, known in the art. For example, the blowers (2) can be divided into two groups, arranged on opposite sides of the sprayer machine. In this configuration, the sprayer machine is capable of spraying two rows parallel to each other, moving in the space comprised between the two rows. The blowers (2) can also be distributed at different heights, to allow the spraying of plants of different heights. Furthermore, the blowers (2) can be mounted on supports movable in space, such as articulated arms.

The sprayer machine according to the present invention further comprises a plurality of nebuliser nozzles (3), each of which is positioned in such a way as to deliver a nebulised product in the airflow produced by one of the blowers (2); In the illustrated embodiment, each nebuliser nozzle (3) is positioned inside a tubular casing (23), near an outlet end of a tubular casing (23). In another possible embodiment, not depicted, each nebuliser nozzle (3) is arranged so as to deliver the product to two or more blowers (2).

The nebuliser nozzles (3), known in the art, are substantially calibrated conduits, of relatively short length, which receive a flow of liquid in input and, as a function of the morphological features of the calibrated conduit and the pressure of the liquid in input, deliver the nebulised liquid in output.

A pump (4) is arranged to supply a flow of product to the nebulisers (3). In particular, the pump (4) is connected to each nebuliser nozzle (3) by means of conduits depicted only schematically. The product is contained in a tank (43), connected to the nebuliser nozzles by means of said conduits depicted only schematically.

In the sprayer machine according to the present invention, each blower (2) is equipped with a controller (21), connected to the electric motor (20) and configured to control the actuation of the electric motor (20); In particular, each controller (21) is independent of the other controllers (21) and is capable of controlling the respective electric motor (20) independently of the other controllers (21).

Furthermore, each nebuliser nozzle (3) is equipped with a control solenoid valve (30), adapted to control the delivery of product.

The term "solenoid valve" is intended as a device provided with at least one shutter, movable within a seat between a closed position, in which it prevents the flow through the valve and thus along the conduit in which the valve is installed, and at least one open position, in which it allows the flow through the valve and thus along the conduit in which the valve is installed. The valve is equipped with an electromechanical actuator which acts on the shutter to move it towards the open or closed position. An elastic means acts antagonistically to the electromechanical actuator to move the shutter in the opposite direction, in the absence of the action exerted by the electromechanical actuator.

In the invention, each solenoid valve (30) can be activated in its open and closed position independently of the other solenoid valves (30).

In a possible embodiment, the nebuliser nozzles (3) are equipped with an ON/OFF solenoid valve (30). In such a case, the flow rate adjustment is obtained by varying the supply pressure of the nebuliser nozzles (3).

In another possible embodiment, the nebuliser nozzles (3) are nozzles equipped with a control solenoid valve (30) which can be modulated in frequency and/or in amplitude, for example by means of the PWM technique. A possible control is carried out considering an operating cycle of a certain duration, for example 100 ms, it is possible to vary the amplitude of a time interval in which the valve is kept open within the operating cycle. Another possible control is carried out by performing opening cycles of fixed duration, varying the frequency of the opening cycles.

Such nozzles are fed at a constant pressure, for example 5 bar, and vary the flow rate delivered by controlling the opening cycles of the control valve, working at constant pressure. Depending on the features of the product to be sprayed, it is possible to choose the most suitable nozzle to obtain the best nebulisation of the product, and therefore to obtain an optimal delivery even when the flow rate varies.

In the sprayer machine according to the present invention, the pump (4) is driven by an electric motor (40), provided with a controller (41) which activates and regulates the operation thereof.

Advantageously, the controllers (21) of the blowers (2), the control solenoid valves (30) and the controller (41) of the pump (4) are arranged to be connected to an electronic control unit (C), configured to control the independent actuation of each thereof, as a function of given conditions of use of the sprayer machine.

Thanks to such features, the sprayer machine according to the present invention offers important advantages relative to the currently available sprayer machines.

First of all, the use of electric motors and electric or electromechanical actuators makes it possible to eliminate the need for a mechanical transmission connected to the tractor. This allows to considerably lighten the weight of the sprayer machine and to improve the energy efficiency thereof.

Furthermore, each controller (21) of the blowers (2) and each control solenoid valve (30) is configured to take on, each independently of the others, an active configuration, in which the respective blower (2) is operating and the respective control solenoid valve (30) is in an open configuration, and an inactive configuration, in which the respective blower (2) is deactivated and the respective control solenoid valve (30) is in a closed configuration.

That is, the independent control of the blowers (2) and the nebuliser nozzles (3) allows to optimize the consumption of product, through the controlled delivery only where actually necessary. For example, in the presence of crops of different height, it is possible to deactivate the nozzles (3) and the blowers (2) which are at an unsuitable height for the useful delivery of product. Furthermore, in cases where the sprayer machine is equipped with blowers (2) arranged on two opposite sides, it is possible to activate the delivery on only one side or on both, depending on where the crop or plant is located relative to the sprayer machine.

Furthermore, the blowers (2) are compactly shaped and mounted on easily adjustable supports. This allows the air and product flow to be directed with considerable precision towards the destination areas.

The control unit (C) can execute the activation commands to the blowers (2) and to the nebuliser nozzles (3) as a function, for example, of an electronic map indicating the areas or plants intended for spraying, with the aid of satellite position information, or based on a direct command from the operator, or based on signals sent by an optical system which will be better described below.

The use of a pump (4) driven by an electric motor (40), in turn equipped with a controller (41), allows to precisely adjust the flow rate of product sent to the nebuliser nozzles (3). Furthermore, the flow rate delivered by each nebuliser nozzle (3) can be controlled by means of the control solenoid valves (30).

In the embodiment in which each tubular casing (23) is mounted on a motorised support which is orientable, to allow the orientation of each blower (2) to be adjusted, the actuators for orienting the tubular casings can also be connected to the electronic control unit (C). Thereby, each blower (2) is orientable independently from the others.

Advantageously, but not necessarily, the machine according to the present invention is provided with a second pump, not depicted, arranged to keep the product to be sprayed moving. For example, the second pump is configured to process a higher flow rate at a lower pressure relative to the first pump. This allows to reduce the power required to drive the first pump. In particular, with the same flow rate and delivery pressure, the total power used by the first and by the second pump is lower relative to the power used by a single pump. To this end, the second pump has a limited head, for example of about 2 bar. Preferably, the second pump is also driven by an electric motor, controlled by the processor (C).

As is well known in the art, the electronic control unit (C) mentioned in the present description and in the following claims is generically referred to as a single unit, but can in fact be provided with distinct functional modules (memory modules or operating modules), for example a module for measuring vehicle speed, a GNSS antenna, a satellite navigator, optical 3D sensors, an inclinometer or other, each responsible for controlling a given device or cycle of operations.

In substance, the electronic control unit (C) may consist of a single electronic device, programmed to carry out the functions described, and the various functional modules can correspond to hardware and/or routine software entities which are part of the programmed device. Furthermore, the units and the aforesaid functional modules can be distributed over different calculators based on the architecture of the network in which they reside. For example, the electronic control unit (C) is a unit dedicated to the sprayer machine, or it is the electronic control unit (C) with which the tractor is equipped. In a further possible configuration, both the sprayer machine and the tractor are equipped with a respective control unit. The two control units are communicating with each other.

Preferably, the controllers (21) of the blowers (2), the control solenoid valves (30) and the controller (41) of the pump (4) can be connected to the processor (C) via CAN bus digital transmission. This makes it possible to considerably simplify the electrical circuit necessary for the operation of the sprayer machine.

Advantageously, the sprayer machine according to the present invention can be equipped with an optical recognition system (5), configured to detect preset features of plants and/or crops intended to receive the sprayed product. The optical system (5) comprises one or more optical sensors. The optical system (5) can be connected to the electronic control unit (C), which is configured to control the controllers (21) of the blowers (2), the control solenoid valves (30) and the controller (41) of the pump (4) as a function of the detection made by the optical system (5). This allows to optimise product consumption, minimising the waste due to spraying to areas where spraying is not necessary.

For example, the machine according to the present invention can be designed to spray a row of plants, or two parallel rows of plants, moving therebetween. If the adjacent plants of a row are divided by a space, the optical system can detect such a space and control the deactivation of the blowers (2) and/or the closure of the nebuliser nozzles (3) which face that space. If so, this is possible for both rows. Furthermore, in the embodiment in which the blowers (2) are distributed at different heights, the optical system (5) allows to activate only those which are at a height suitable for effectively spraying the product towards the plants, and to deactivate those which are at an unsuitable height.

Therefore, the optical system (5) allows to further improve the features of the sprayer machine according to the present invention, further reducing product consumption.

Advantageously, all the electrical or electronic components mentioned in the previous description can be powered with a voltage of 48-volt in direct current. The voltage of 48-volt can be withdrawn from the battery of the tractor, or from a battery dedicated to the power supply of the sprayer machine according to the present invention.

## Claims

1. A sprayer machine, comprising:
a plurality of blowers (2), each driven by a respective electric motor (20) and configured to produce an airflow;
a plurality of nebuliser nozzles (3), each of which is positioned in such a way as to deliver a nebulised product in the airflow produced by one of the blowers (2);
an electric pump (4), connected to the nebuliser nozzles (3) and adapted to supply a flow of product to the nebulisers (3);
**characterised in that**:
each blower (2) is equipped with a controller (21), connected to the electric motor (20) and configured to control the actuation of the electric motor (20);
each nebuliser nozzle (3) is equipped with a control solenoid valve (30),
adapted to control the delivery of product;
the electric pump (4) is driven by an electric motor (40), equipped with a controller (41);
the controllers (21) of the blowers (2), the control solenoid valves (30) and
the controller (41) of the pump (4) are connected to an electronic control unit (C), configured to control the independent actuation of each as a function of actual conditions of use of the sprayer machine.

2. The sprayer machine according to claim 1, wherein the controllers (21) of the blowers (2), the control solenoid valves (30) and the controller (41) of the pump (4) are connected to the electronic control unit (C) via CAN bus digital transmission.

3. The sprayer machine according to claim 1, wherein the aforementioned components are powered with a 48-volt DC voltage.

4. The sprayer machine according to one of the preceding claims, wherein each controller (21) of the blowers (2) and each control solenoid valve (30) is configured to take on, each independently of the others, an active configuration, in which the respective blower (2) is operating and the respective control solenoid valve (30) is in an open configuration, for delivery of the product, and an inactive configuration, in which the respective blower (2) is deactivated and the respective control solenoid valve (30) is in a closed configuration, so as not to deliver the product.

5. The sprayer machine according to one of the preceding claims, wherein each blower is orientable in space to allow the orientation of the delivered flow.

6. The machine according to claim 5, wherein each blower (2) comprises a rotor (22), configured to produce an airflow, and a tubular casing (23), which contains within it the rotor (22) and has a longitudinal axis (X).

7. The sprayer machine according to claim 6, wherein each tubular casing (23) is mounted on an orientable support to allow for adjusting the orientation of each longitudinal axis (X).

8. The sprayer machine according to one of the preceding claims, comprising an optical recognition system (5), configured to detect preestablished characteristics of plants and/or crops intended to receive the sprayed product, wherein the optical system (5) is connectable to the processor (C), and wherein the processor (C) is configured to control the controllers (21) of the blowers (2), the control solenoid valves (30) and the controller (41) of the pump (4) as a function of the detection made by the optical system (5).

9. The sprayer machine according to one of the preceding claims, wherein each control solenoid valve (30) is activatable in a variable frequency and/or amplitude to adjust the flow of product sent to the respective nebuliser nozzle (3).

10. The machine according to one of the preceding claims, comprising a second pump, adapted to agitate the product supplied to the nebuliser nozzles (3).

11. The machine according to claim 10, wherein said second pump is driven by an electric motor, controlled by the electronic control unit (C).
